# EUROPEAN PATENT SPECIFICATION

(11) **EP 2 433 779 B1**
(45) Date of publication and mention of the grant of the patent: **12.08.2015**
(21) Application number: 10400046.8
(22) Date of filing: 23.09.2010
(51) Int. Cl.: B29C 70/08, B29C 70/48, B32B 27/12

(54) **Composite element made from a preform and a multi-layer thermoplastic foil**
Aus einer Vorform und einer mehrlagigen thermoplastischen Folie & xA;hergestelltes Verbundelement
Élément composite fabriqué à partir d'une préforme et d'une feuille multicouche thermoplastique

(43) Date of publication of application: 28.03.2012
(73) Proprietor: AIRBUS HELICOPTERS DEUTSCHLAND GmbH, 86609 Donauwörth (DE)
(72) Inventor: Kunze, Steffen, 83620 Vagen (DE); Spanner, Hermann, 83673 Bichl (DE); Unterhauser, Thomas, 84137 Vilsbiburg (DE); Weimer, Christian, 81543 München (DE)
(74) Representative: GPI & Associés

(56) References cited:
- EP-A1- 1 795 332
- WO-A2-02/074469
- DE-U1-202008 012 572

## Description

The invention relates to a composite element made from a preform of fibre-reinforced plastic material with the features of the preamble of claim 1 and a method of fabrication of such a composite element with the features of the preamble of claim 10.

Composite elements in varying geometrical shapes, such as hollow beams, are made from fibre-reinforced plastic material. Complex shapes of such composite elements can be created by applying the fibre-reinforced plastic material around suitably shaped cores and curing the fibre reinforced plastic material. The core may be removed from the fibre reinforced plastic material after curing. DE 10 2005 011 930 (B3) discloses the production of sealed water-soluble moulding cores by 1. filling a mould with water-soluble moulding material; 2. curing it to produce an undersized core; 3. vacuum packing the core in a film; and 4. sealing the package. A reinforcing fiber material may be applied onto the package, said reinforcing fiber material being subsequently impregnated with curable resin and said resin being cured to form a solid, stable composite element with the film serving as a barrier between the core and the resin to prevent the resin from infiltrating into the core. Technical disadvantages still remain with respect to handling and characteristics of the composite elements, such problems being exposed for example in WO 02/057527 A1 directed to a method of producing a non-crimp fabric. One option for improved handling of composite elements from fibre-reinforced plastic material is to provide the fibre-reinforced plastic material as a preform, i. e. a preshaped fibrous reinforcement material that has been prepared for convenient handling and control of uniformity during the mold loading process. A binder is used for the preparation of a preform. Binder remaining in the preform during curing may have negative consequences with regard to the coherence of the resulting composite elements as the binder is not compatible with the infusion resin. Nowadays serial production does not provide any technology to mount such preforms onto any core materials. All the preforms have to be arranged manually in a RTM-mould implying high risks as to the production. Technological and economical advantages of a preform mounted by way of a supplemental intermediate adhesive fleece to a not dissoluble foam plastic core could be demonstrated. Such a preform mounted by way of an intermediate adhesive fleece to a core does not exclude the possibility of penetration of resin into the core when the reinforcing fibre material of the preform is subsequently impregnated with said curable resin to form the composite element.

The document EP 1795332 A1 discloses a hollow core composite assembly, including a hollow core base having an open core surface, a solid film applied to the hollow core base and an adhesive layer positioned between the solid film and the open core surface. The resultant hollow core composite assembly is cured to provide a structure suitable for use within a liquid molding process.

It is an object of the invention to provide for composite elements made from a preform of fibre-reinforced plastic material without the disadvantages of the state of the art and to provide a method of fabrication for such a composite element from a preform.

The solution is provided with composite elements made from a preform of fibre-reinforced plastic material with the features of claim 1 and with a method of fabrication of such a composite element from a preform with the features of claim 10.

According to the invention a composite element is made by curing of a preform of fibre-reinforced plastic material said preform being arranged around a core with a foil between the core and the fibre-reinforced plastic material. The foil is a multi-layer thermoplastic foil. At least one of the layers of said multi-layer thermoplastic foil has a melting temperature different from the melting temperatures of the other layers. An inner layer of said multi-layer thermoplastic foil may preferably have a higher melting temperature than an outer layer of said multi-layer thermoplastic foil. The multi-layer thermoplastic foil of the inventive composite element allows the combination of the step of mounting the preform to the core with the preceding step of stabilisation of the perform. At least one layer of said multi-layer thermoplastic foil can serve due to its melting temperature as a barrier towards the core and at least one of the outer layers of said multi-layer thermoplastic foil can serve due to its lower melting temperature as an adhesion element for fixation of the preform to the core and stabilisation. Thus the inventive arrangement of said multi-layer thermoplastic foil with an outer adhesive layer around the core allows improved handling of the preform and better draping of the core during the step of mounting the preform to the core and thus results in cost efficiency, reduction of production time and working steps. Less or no binder is necessary for the preform. Additionally the multi-layer thermoplastic foil with a barrier layer avoids contamination of the core with the resin used for curing of the fibre-reinforced plastic material such feature being particularly advantageous for open-cell cores.

According to a preferred embodiment of the invention said multi-layer thermoplastic foil is provided with two layers and a dissoluble core. One outer layer of said multi-layer thermoplastic foil serves as an adhesion element for improved handling of the preform during the step of mounting the preform to the core while the inner barrier layer avoids penetration of resin towards the core during curing of the fibre-reinforced plastic material of the preform. The core is dissoluble and can be removed after curing of the fibre-reinforced plastic material of the preform for low weight of the inventive composite element.

According to a further preferred embodiment of the invention said outer layer of said multi-layer thermoplastic foil with a contact surface to the preform of fibre-reinforced plastic material has a lower melting temperature than the inner layer with a contact surface to the core for advantageous provision of the adhesive characteristic to said outer layer and the isolating characteristic to said inner layer.

According to a further preferred embodiment of the invention the multi-layer thermoplastic foil is provided with at least three layers and a core not being dissoluble. A first outer layer of said multi-layer thermoplastic foil with a contact surface to the preform of fibre-reinforced plastic material has a lower melting temperature than an intermediate layer between said first and a second outer layer of said multi-layer thermoplastic foil with as well a lower melting temperature and a contact surface to the core for advantageous provision of adhesion between said first outer layer and the preform of fibre-reinforced plastic material and adhesion between said second outer layer and the core thus providing for the transfer of shear forces/stresses from the preform via the multi-layer thermoplastic foil to the core. The isolating characteristic against any leaking of resin towards the core is provided by said intermediate layer between said first and said second outer layer of said multi-layer thermoplastic foil.

According to a further preferred embodiment of the invention said multi-layer thermoplastic foil is co-extruded with the inherent combination of barrier and adhesion characteristics for specific layers.

According to a preferred embodiment of the invention a method of making a composite element from a preform of fibre-reinforced plastic material is provided by the following steps: preparing the preform to a suitable shape by using a binder powder and/or by stitching its fabric, wrapping the co-extruded multi-layer thermoplastic foil around the core with the outer layer with adhesive properties facing away from the core and the inner layer with a barrier functionality adjacent to the core, attaching the preform of fibre-reinforced plastic material to the outer layer of the multi-layer thermoplastic foil, applying resin to the preform and curing the composite element in a mould, and removing the dissoluble core by scavenging inside the composite element. Removing the dissoluble core from inside the composite element results in a light weight composite element with particular advantages for appliances in aircrafts. The inventive method allows improved handling of the preform, better draping of the core during the step of mounting the preform to the core and thus results in cost efficiency, reduction of production time and working steps.

According to a further preferred method of the invention wrapping of the co-extruded multi-layer thermoplastic foil around the core may be effected with the first outer layer with adhesive properties facing away from the core, the second outer layer with adhesive properties being adjacent to the core and the inner, intermediate layer with a barrier functionality being between the first outer layer and the second outer layer. The core is maintained inside the composite element after cure and the second outer layer with adhesive properties adjacent to the core provides for introduction of any shear forces/stresses from the preform via the multi-layer thermoplastic foil into the core for improved load bearing characteristics of the composite element while preserving all a. m. advantages of the inventive method.

A preferred embodiment of the invention is presented by reference to the attached drawing.

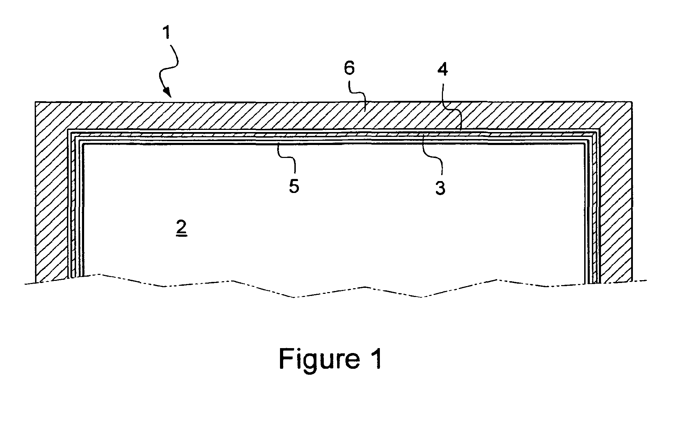

Fig. 1 shows a schematic view of a cross-section of a composite element according to the invention.

Fig. 1: An essentially rectangular composite element 6 is built from a preform 1 of fibre-reinforced plastic material. The preform 1 is shaped in a two- or three-dimensional form and is arranged around a correspondingly shaped dissoluble core 2 of the open-cell type. For the preparation of preform 1 reference is made to the teaching of WO 02/057527 A1 said teaching being introduced into the present application.

A multi-layer thermoplastic foil 3 is arranged between the preform 1 and the core 2.

An outer layer 4 of said multi-layer thermoplastic foil 3 is provided with a low viscosity, adhesive contact surface towards the preform 1 of fibre-reinforced plastic material due to a lower melting temperature than the melting temperature of the inner layer 5 with a contact surface towards the core and a barrier functionality for any resin penetrating during curing from the fibre-reinforced plastic material of the preform 1 through the outer layer 4.

An alternative multi-layer thermoplastic foil (not shown) between the preform and the core is provided with at least three layers: a first outer layer, a second outer layer and an intermediate layer between the first outer layer and the second outer layer. The first outer layer is provided with an adhesive contact surface towards the preform of fibre-reinforced plastic material due to a lower melting temperature than the melting temperature of the intermediate layer with a barrier functionality for any resin penetrating during curing from the fibre-reinforced plastic material of the preform through the first outer layer. The second outer layer of said multi-layer thermoplastic foil has as well a lower melting temperature than the melting temperature of the intermediate layer and a contact surface to the core for provision of adhesion between said second outer layer and said core.

### Method of making a composite element from a perform

The preform 1 of fibre-reinforced plastic material is prepared to an essentially rectangular shape by using a binder powder and/or by stitching its fabric.

The multi-layer thermoplastic foil 3 is made from coextrusion. The multi-layer thermoplastic foil 3 is wrapped around the essentially rectangular core 2 with the outer layer 4 with adhesive properties facing away from the core 2 and the inner layer 5 with a barrier functionality adjacent to the core 2. The multi-layer thermoplastic foil 3 is shrink wrapped to the core 2.

The preform 1 of fibre-reinforced plastic material is attached to the outer layer 4 of the multi-layer thermoplastic foil 3. Resin is applied to the preform 1 and cured to the composite element 6 in a mould.

Subsequently the dissoluble core 2 is removed by scavenging inside the composite element 6.

Alternatively the multi-layer thermoplastic foil may be wrapped, particularly shrink wrapped, around the essentially rectangular core with the first outer layer with adhesive properties facing away from the core, the second outer layer with adhesive properties adjacent to the core and an intermediate layer with a barrier functionality between the first outer layer and the second outer layer. The core is maintained inside the composite element.

## Claims

1. A composite element (6) made from a preform (1) of fibre-reinforced plastic material arranged around a core (2) with a foil between the preform (1) and the core (2),
**characterized in that** the foil is a multi-layer thermoplastic foil (3) with at least one of the layers (4) of said multi-layer thermoplastic foil (3) having a different melting temperature from the melting temperature of at least one of the other layers (5) and **in that** an outer layer (4) of said multi-layer thermoplastic foil (3) has a lower melting temperature than an inner layer (5).

2. A composite element (6) according to claim 1,
**characterized in that** the multi-layer thermoplastic foil (3) is provided with two layers (4) and **in that** the core (2) is dissoluble.

3. A composite element (6) according to claim 2,
**characterized in that** the inner layer (5) of said multi-layer thermoplastic foil (3) has a barrier functionality.

4. A composite element (6) according to claim 2,
**characterized in that** the outer layer (4) of said multi-layer thermoplastic foil (3) has an adhesion functionality.

5. A composite element (6) according to claim 1,
**characterized in that** the multi-layer thermoplastic foil (3) is provided with at least three layers (4) and **in that** the core (2) is not dissoluble.

6. A composite element (6) according to claim 5,
**characterized in that** two outer layers (4) of said multi-layer thermoplastic foil (3) have a lower melting temperature than an intermediate layer (5).

7. A composite element (6) according to claim 5,
**characterized in that** the intermediate layer (5) of said multi-layer thermoplastic foil (3) has a barrier functionality.

8. A composite element (6) according to claim 5,
**characterized in that** each of the outer layers (4) of said multi-layer thermoplastic foil (3) have an adhesion functionality.

9. A composite element (6) according to claim 1,
**characterized in that** said multi-layer thermoplastic foil (3) is co-extruded.

10. Method of making from a preform (1) a composite element of fibre-reinforced plastic material with the following steps:
a) preparing the preform (1) to a suitable shape by using a binder powder and/or by stitching its fabric,
b) wrapping the co-extruded multi-layer thermoplastic foil (3) around the core (2) with the outer layer (4) with adhesive properties facing away from the core (2) and the inner layer (5) with a barrier functionality adjacent to the core (2) and an outer layer (4) of said multi-layer thermoplastic foil (3) having a lower melting temperature than the inner layer (5),
c) attaching the preform (1) of fibre-reinforced plastic material to the outer layer (4) of the multi-layer thermoplastic foil (3)
d) applying resin to the preform (1) and curing the composite element (6) in a mould, and
e) removing the dissoluble core (2) by scavenging inside the composite element (6).

## Patentansprüche

1. Verbundelement (6), hergestellt aus einer Vorform (1) aus faserverstärktem Kunststoffmaterial, welches um einen Kern (2) mit einer Folie zwischen der Vorform (1) und dem Kern (2) angeordnet ist, **dadurch gekennzeichnet, dass** die Folie eine mehrlagige thermoplastische Folie (3) ist, wobei mindestens eine der Lagen (4) der mehrlagigen thermoplastischen Folie (3) eine von der Schmelztemperatur mindestens einer der anderen Lagen (5) verschiedene Schmelztemperatur aufweist, und dadurch, dass eine äußere Lage (4) der mehrlagigen thermoplastischen Folie (3) eine geringere Schmelztemperatur aufweist als eine innere Lage (5).

2. Verbundelement (6) nach Anspruch 1,
**dadurch gekennzeichnet, dass** die mehrlagige thermoplastische Folie (3) zwei Lagen (4) aufweist, und dadurch, dass der Kern auflösbar ist.

3. Verbundelement (6) nach Anspruch 2,
**dadurch gekennzeichnet, dass** die innere Lage (5) der mehrlagigen thermoplastischen Folie (3) eine Sperrfunktion hat.

4. Verbundelement (6) nach Anspruch 2,
**dadurch gekennzeichnet, dass** die äußere Lage (4) der mehrlagigen thermoplastischen Folie (3) eine Klebefunktion hat.

5. Verbundelement (6) nach Anspruch 1,
**dadurch gekennzeichnet, dass** die mehrlagige thermoplastische Folie (3) mit mindestens drei Lagen (4) versehen ist, und dadurch, dass der Kern (2) nicht auflösbar ist.

6. Verbundelement (6) nach Anspruch 5,
**dadurch gekennzeichnet, dass** zwei äußere Lagen (4) der mehrlagigen thermoplastischen Folie (3) eine niedrigere Schmelztemperatur als eine Zwischenlage (5) aufweisen.

7. Verbundelement (6) nach Anspruch 5,
**dadurch gekennzeichnet, dass** die Zwischenlage (5) der mehrlagigen thermoplastischen Folie (3) eine Sperrfunktion hat.

8. Verbundelement (6) nach Anspruch 5,
**dadurch gekennzeichnet, dass** jede der äußeren Lagen (4) der mehrlagigen thermoplastischen Folie (3) eine Klebefunktion hat.

9. Verbundelement (6) nach Anspruch 1,
**dadurch gekennzeichnet, dass** die mehrlagige thermoplastische Folie (3) koextrudiert ist.

10. Verfahren zur Herstellung, ausgehend von einer Vorform (1) eines Verbundelements aus faserverstärktem Kunststoffmaterial mit den folgenden Schritten:
a) Vorbereiten der Vorform (1) zu einer geeigneten Form unter Verwendung eines Binderpulvers und/oder durch Heften ihres Stoffes,
b) Wickeln der koextrudierten mehrlagigen thermoplastischen Folie (3) um den Kern (2), wobei die äußere Lage (4) mit Klebeeigenschaften von dem Kern (2) abgewandt ist, und die innere Lage (5) mit Sperrfunktion an dem Kern (2) anliegend angeordnet ist, und wobei eine äußere Lage (4) der mehrlagigen thermoplastischen Folie (3) eine niedrigere Schmelztemperatur als die innere Lage (5) aufweist,
c) Befestigen der Vorform (1) aus faserverstärktem Kunststoffmaterial an der äuf3eren Lage (4) der mehrlagigen thermoplastischen Folie (3),
d) Aufbringen von Harz auf die Vorform (1) und Aushärten des Verbundelements (6) in einer Gussform, und
e) Entfernten des löslichen Kerns (2) durch AusspWen innerhalb des Verbundelements (6).

## Revendications

1. Elément composite (6) fabriqué à partir d'une préforme (1) de matériau plastique renforcé de fibres disposée autour d'un coeur (2) avec une feuille entre la préforme (1) et le coeur (2).
**caractérisé en ce que** la feuille est une feuille thermoplastique multicouche (3) avec au moins une des couches (4) de ladite feuille thermoplastique multicouche (3) ayant une température de fusion différente de la température de fusion d'au moins une des autres couches (5) et **en ce qu'**une couche extérieure (4) de ladite feuille thermoplastique multicouche (3) a une température de fusion inférieure à celle d'une couche intérieure (5).

2. Elément composite (6) selon la revendication 1,
**caractérisé en ce que** la feuille thermoplastique multicouche (3) est pourvue de deux couches (4) et **en ce que** le coeur (2) est dissoluble.

3. Elément composite (6) selon la revendication 2,
**caractérisé en ce que** la couche intérieure (5) de ladite feuille thermoplastique multicouche (3) a une fonctionnalité de barrière.

4. Elément composite (6) selon la revendication 2,
**caractérisé en ce que** la couche extérieure (4) de ladite feuille thermoplastique multicouche (3) a une fonctionnalité d'adhérence.

5. Elément composite (6) selon la revendication 1,
**caractérisé en ce que** la feuille thermoplastique multicouche (3) est pourvue d'au moins trois couches (4) et **en ce que** le coeur (2) n'est pas dissoluble.

6. Elément composite (6) selon la revendication 5,
**caractérisé en ce que** deux couches extérieures (4) de ladite feuille thermoplastique multicouche (3) ont une température de fusion inférieure à celle d'une couche intermédiaire (5).

7. Elément composite (6) selon la revendication 5,
**caractérisé en ce que** la couche intermédiaire (5) de ladite feuille thermoplastique multicouche (3) a une fonctionnalité de barrière.

8. Elément composite (6) selon la revendication 5,
**caractérisé en ce que** chacune des couches extérieures (4) de ladite feuille thermoplastique multicouche (3) a une fonctionnalité d'adhérence.

9. Elément composite (6) selon la revendication 1,
**caractérisé en ce que** ladite feuille thermoplastique multicouche (3) est coextrudée.

10. Procédé de fabrication à partir d'une préforme (1) d'un élément composite de matériau plastique renforcé de fibres avec les étapes suivantes :
a) préparer la préforme (1) en une forme appropriée en utilisant une poudre de liant et/ou en cousant son tissu,
b) enrouler la feuille thermoplastique multicouche coextrudée (3) autour du coeur (2) avec la couche extérieure (4) avec des propriétés adhésives tournant le dos au coeur (2) et la couche intérieure (5) avec une fonctionnalité de barrière adjacente au coeur (2) et une couche extérieure (4) de ladite feuille thermoplastique multicouche (3) ayant une température de fusion inférieure à celle de la couche intérieure (5),
c) attacher la préforme (1) de matériau plastique renforcé de fibres à la couche extérieure (4) de la feuille thermoplastique multicouche (3),
d) appliquer une résine à la préforme (1) et durcir l'élément composite (6) dans un moule, et
e) retirer le coeur dissoluble (2) en le récupérant à l'intérieur de l'élément composite (6).
